# EUROPÄISCHE PATENTSCHRIFT

(11) **EP 2 873 700 B1**
(45) Veröffentlichungstag und Bekanntmachung des Hinweises auf die Patenterteilung: **09.03.2016**
(21) Anmeldenummer: 14193163.4
(22) Anmeldetag: 14.11.2014
(51) Int. Cl.: C08L 95/00

(54) **Abdichtungsband und Verfahren zur Herstellung eines solchen Abdichtungsbandes**
Sealing strip and method for manufacturing same
Bande d'étanchéification et procédé de fabrication d'une telle bande d'étanchéification

(30) Priorität: 18.11.2013 AT 8912013
(43) Veröffentlichungstag der Anmeldung: 20.05.2015
(73) Patentinhaber: ÖSTERREICHISCHE VIALIT GESELLSCHAFT mbH, 5280 Braunau/Inn (AT)
(72) Erfinder: Bruckbauer, Alexander, 5280 Braunau am Inn (AT)
(74) Vertreter: Patentanwälte Puchberger, Berger und Partner

(56) Entgegenhaltungen:
- EP-A1- 0 792 973
- AT-B- 406 375
- US-A- 5 981 061

## Beschreibung

Die Erfindung betrifft ein Abdichtungsband mit einem bitumenhaltiges Bindemittel enthaltenden Bandkörper, Verfahren zur Herstellung eines solchen Abdichtungsbandes, ein Verfahren zum Abdichten einer Fuge zwischen einem kalten Element und einer zu einem späteren Zeitpunkt heiß eingebauten, angrenzenden Asphaltschicht unter Verwendung eines solchen Abdichtungsbandes sowie andere Verwendungen eines solchen Abdichtungsbandes.

Im Straßenbau werden in den oberen gebundenen Schichten hauptsächlich die Baustoffe Beton und Asphalt verwendet, wobei von den beiden Baustoffen der Asphalt wesentlich häufiger und vielseitiger eingesetzt werden kann. Bei Beton ist es aufgrund des thermischen Dehn- und Schrumpfverhaltens stets erforderlich, in getrennten Feldern mit separat zu vergießenden dauerhaften Dehnfugen zu arbeiten, da es sonst zu unzulässig starken Zug- und Druckspannungen im Baustoff käme und der Beton dabei zerstört werden könnte. Asphalt hingegen ist aufgrund seines viskoelastischen Fließverhaltens in der Lage, thermische Zug- und Druckspannungen innerhalb seines Gefüges weitgehend abzubauen, er kann daher im Prinzip fugenlos gebaut werden. Allerdings ist es infolge beschränkter Umleitungsmöglichkeiten des fließenden Verkehrs bei realen Straßenbauvorhaben häufig erforderlich, den Asphalt nicht in der gesamten Straßenbreite sondern in Bahnen einzubauen. Daher ergibt sich die Notwendigkeit, heiße Asphaltfertiger-Bahnen an bereits abgekühlte Bahnen anzuschließen. Auch bei Reparatur- und Instandhaltungsarbeiten ist es erforderlich, Heißasphaltmischgut an den Bestand, also kaltes Asphaltmischgut oder Leistensteine und Einbauten, anzuschließen. Diese Anschlüsse sowie die sogenannte "Fertigernaht" stellen sich als Schwachpunkte heraus, die entweder eine zeitaufwändige laufende Pflege erfordern oder bestimmter vorbeugender Maßnahmen bedürfen. Das konkrete Problem ist die unzureichende Verdichtung des Asphaltmischgutes an den Rändern einer Fertigerbahn, weil dort das "Widerlager" (die Einspannung des Mischgutes) deutlich abgeschwächt ist, das Mischgut beim Verdichtungsvorgang also gewissermaßen "davonläuft", was zu einem zu niedrigen Verdichtungsgrad führt. Ein zu niedriger Verdichtungsgrad bedeutet einen zu hohen Hohlraumgehalt und damit Wasserdurchlässigkeit. Daher beginnt der Naht- oder Anschlussbereich zumeist wenige Jahre nach Herstellung der Asphaltschichten "auszumagern" und durch die Einwirkung von Wasser, Frost und Verkehrsbeanspruchung infolge von Substanzverlust schadhaft zu werden. Auch beim Wegfräsen einer Asphaltschicht und nachfolgender Wiederherstellung dieser Schicht ist der Kontaktbereich zwischen Alt und Neu ein Schwachpunkt, da er stets mangelhafte Dichtheit gegen eindringendes Wasser aufweist. Im Vorschriftenwesen sind daher spezielle Maßnahmen zur Behandlung dieser Schwachstellen verankert, beispielsweise in Österreich im Arbeitspapier Nr. 5 der FSV (Forschungsgesellschaft für Straße - Schiene - Verkehr) "Ränder, Nähte, Anschlüsse", Ausgabe 2003 sowie Ausgabe 2013 in Bearbeitung. Notwendige zielführende Maßnahmen können das Einhalten eines speziellen Walzverdichtungsschemas im Nahtbereich in Verbindung mit Beschichtungsmaßnahmen der kalten Nahtflanken oder das Einlegen eines Fugenbandes im Anschluss- oder Nahtbereich sein. Das gemeinsame Ziel dieser Maßnahmen ist, durch Bindemittelanreicherung eine dichtere hohlraumarme Asphaltmörtelzone zu erhalten, um das Eindringen von Wasser zu verhindern.

In manchen Fachaufsätzen wird auch die Bedeutung einer Dehnungszone betont, damit sich die Asphaltpakete beim thermischen Schrumpfen bei Frosttemperaturen voneinander wegbewegen könnten, ohne dass sich ein Riss bildet. Es wird dabei fälschlicherweise manchmal auf die Notwendigkeit einer mindestens 1 cm breiten Dehnfuge hingewiesen und daher werden besonders dicke Nahteinlagebänder empfohlen. Diese Hypothese ist jedoch technisch unrichtig, denn dann müssten nahtlos, heiß an heiß eingebaute Fertigerbahnen auch versagen, was aber nicht der Fall ist.

Durchaus von Bedeutung kann jedoch die statische und dynamische Entkopplung der beiden Fahrbahnhälften beim Lastübergang sein. Durch den Schwerlastverkehr kommt es zu einer, wenn auch geringfügigen Einsenkungsmulde im Asphaltbereich unter dem Lastrad. Auf der Gegenfahrbahn verläuft die Einsenkung aber nie gleichzeitig, sondern zeitversetzt, daher kommt es zu einem Scheren der beiden Schichtpakete aneinander. Wenn nun das Tragschichtpaket unterdimensioniert oder schon gealtert ist ("Ermüdung des Asphaltes"), können diese Lastwechselbeanspruchungen durch mangelhafte Verzahnung der Asphalt-Gesteinskörnungen so groß werden, dass die Asphaltsubstanz geschädigt wird. Es ist daher wichtig, dass in den Schichtpaketen "Übergriffe" (Schichtenversatz) eingeplant werden oder das Nahtbehandlungsmaterial möglichst kraftschlüssig an den Flanken der beiden Bahnen haftet, um das Asphaltpaket der Gegenfahrbahn statisch-dynamisch bei jedem Lastradübergang mitzuziehen, sodass die Scherbeanspruchung möglichst niedrig gehalten werden kann, ähnlich wie bei einem stets erwünschten, aber selten durchführbaren Einbau "heiß an heiß".

Gemäß derzeitiger Gepflogenheit werden häufig relativ dicke, sogenannte aufschmelzbare oder sogenannte "selbstklebende" Fugenbänder mit dem Argument der besseren Dehnungsüberbrückung und besseren Aufnahme von Scherkräften verwendet. Um eine gute Flankenhaftung an der kalten Fertigerbahn sicherzustellen, wurde früher ein Fugenband mit einer Gasflamme angeschmolzen und an die kalte Asphaltflanke fest angedrückt. Dieser Arbeitsvorgang ist jedoch sehr zeit- und personalaufwändig, verbrennungsgefährdend und körperlich anstrengend, er wurde daher zumeist zu schlampig von unkundigem Personal ausgeführt. Daher haben sich einschlägige Fachfirmen bemüht, selbstklebende Fugenbänder zu entwickeln, die den baustellenseitigen Verarbeitungsaufwand durch Kaltverkleben möglichst reduzieren sollen (z.B. EP 0 792 973 A1, EP 1 270 835 A2). Es zeigt sich allerdings auch bei dieser Form der Verarbeitung, dass ein niveaugerechtes Platzieren des Fugenbandes in der Baupraxis recht schwierig ist. Es soll nämlich einige Millimeter überhöht angebracht werden, damit nach Einbau der angrenzenden Asphaltbahn beim nachfolgenden Walzvorgang der sogenannte "Nietkopf" erzielt wird. Damit ist das Auseinanderdrücken des über das Asphaltniveau hinausragenden Teiles des Bandes gemeint. Er soll insbesondere die kalte Asphaltbahnflanke (wie vorher angemerkt mit randseitig mangelhafter Verdichtung) von oben her abdichten. In der Praxis stellt sich aber bei dieser Arbeitstechnik in der Regel ein gravierender Nachteil ein: Der Baustellenverkehr (Mischgutzubringer-Lkw) fährt gezwungenermaßen häufig über die kalte Asphaltbahn, an der das Fugenband vorher angeklebt worden ist. Dabei wird das leicht überragende Band vom Reifen nach unten gedrückt und es löst sich dadurch von der Flanke ab. Es entsteht eine verbundlose Zone, die vom Mischgut der neuen Fertigerbahn "hinterlaufen" werden kann und es resultiert eine unzureichend dichte Fertigemaht mit einem sehr uneinheitlichen Erscheinungsbild. Außerdem ist dieser "Nietkopf" nicht breit genug, die gesamte schlecht verdichtete Randzone der kalten Asphaltbahn zu überdecken, und zudem wirkt sich jede Ungenauigkeit bei der Verlegung auf dessen Breite nachteilig aus.

Ein weiterer Nachteil der oft über 1 cm dicken und etwa 2 bis 6 cm breiten Fugenbänder des Standes der Technik, die zumeist auch einen relativ hohen Anteil von Füllstoffbeimengungen von bis zu 50 Gew.-% beinhalten, entsteht dadurch, dass die Wärmeenergie der heißen Asphaltbahn nicht ausreichend ist, das Fugenband durch die Dicke der Schicht hindurch vollständig aufzuschmelzen, da Bitumen ein sehr schlechter Wärmeleiter ist und der Wärmeentzug durch die kalte Asphaltbahn zu groß ist, zumal häufig nur 3 bis 4 cm dünne Asphaltdeckschichten eingebaut werden. Der Schmelzpunkt dieser Fugenbänder von über 100 °C wird nicht durchgängig erreicht, wenn die Asphaftschichten mit Mindesttemperaturen von 130 °C und beim in zunehmendem Maße eingesetzten temperaturabgesenkten Asphalt sogar unter 100 °C eingebaut werden. Die Folge ist häufig ein nur mangelhaft ausgeprägter "Nietkopf" und daher eine wiederum unzureichend dichte Naht-Schwachstelle. Messungen der Schichthaftung im Fertigernahtbereich haben gezeigt, dass die Haftzugfestigkeit bei 0 °C zumeist unter 1 N/mm² liegt und der Abriss stets an der kalten Seite der Flanke eintritt. Damit wird auch die Hypothese gestützt, dass das Argument, ein Fugenband könne horizontal wirkende thermische Schrumpfspannungen zwischen zwei Asphaltbahnen aufnehmen, nicht den Tatsachen entspricht.

Aufgabe der vorliegenden Erfindung ist es ein Abdichtungsband zu schaffen, bei dessen Verwendung die obengenannten Probleme gemindert oder eliminiert werden.

Die Aufgabe wird durch ein Abdichtungsband mit einem bitumenhaltiges Bindemittel enthaltenden Bandkörper gelöst, wobei das bitumenhaltige Bindemittel ein reaktiv aushärtendes, bitumenhaltiges Bindemittel ist, das auf bis zu 50 %, vorzugsweise 20 bis 50 % nachwachsenden Rohstoffen basiert. Ein Vorzug des erfindungsgemäßen Abdichtungsbandes ist die nachwachsende Rohstoffbasis des Reaktivbitumens. Zu einem erheblichen Anteil von 20 bis 50 % kann daher das auf Erdöl basierende Bitumen substituiert werden, daher entspricht das erfindungsgemäße Nahtfolienband den Forderungen nach Nachhaltigkeit zukünftiger Baustoffe gemäß europäischer Bauproduktenverordnung in hohem Maße. Ein weiterer Beitrag dazu ist auch der energiegünstige kalte Herstellprozess auf der Fertigungsstraße, der sowohl Heizenergie als auch Abkühlenergie einsparen hilft. Es ist lediglich ein einmaliger Energieaufwand bei der Herstellung des Reaktivbitumens erforderlich, aber auch der ist vergleichsweise zu Heißvergussmassen bzw. Fugenbandmassen relativ niedrig. Ferner wird durch die neuartige stoffliche Zusammensetzung, basierend auf bis zu 50 % nachwachsenden Rohstoffen, die thermische Leitfähigkeit merklich erhöht, was den Wärmedurchgang von der heißen Asphaltbahn durch das Band hindurch bis zur kalten Asphaltbahn des Bestandes verbessert.

Vorzugsweise enthält der Bandkörper 90 bis 100 Gew.-%, insbesondere 100 Gew.-%, reaktiv aushärtendes Bindemittel. Dieser gegenüber dem Stand der Technik deutlich erhöhte Bindemittelanteil und damit stark gesenkter Füllstoffanteil vermindert die Ermüdungsanfälligkeit bei dynamischer und thermischer Belastung und sorgt für eine Aufrechterhaltung der Beweglichkeit bei einer allfälligen Scherbeanspruchung selbst bei einer Dicke des Bandes von unter 10 mm, vorzugsweise von 3 bis 6 mm, welche reduzierte Dicke das vollständige Durchschmelzen des Abdichtungsbandes bzw. des Nahtbandes beim Einbau der Heißen Asphaltbahn sicherstellt. Gemeinsam mit der besseren thermischen Leitfähigkeit aufgrund des Anteils an nachwachsenden Rohstoffen ergibt sich ein erheblich besserer Kraftschluss zwischen den horizontal angrenzenden Asphaltpaketen. Die Lehre der vorliegenden Erfindung führt hier weg von den traditionell dicken Fugenbändem.

Durch die Verwendung eines reaktiv aushärtenden, bitumenhaltigen Bindemittels für die Herstellung des Abdichtungsbandes, kann das Abdichtungsband mit geringem Energiebedarf bei Raumtemperatur hergestellt werden. Soll das Abdichtungsband zur einfachen Anbringung an z.B. einer bereits erkalteten Asphaltbahn, einem Leistenstein oder einem Einbau mit einer Klebeschicht versehen werden, kann dadurch dafür auch eine Klebefolie verwendet werden, die keine sehr hohe Temperaturbeständigkeit haben muss.

Für bestimmte Anwendungen ist vorzugsweise der Bandkörper von einer Kunststofffolie, vorzugsweise einer Polyethylenfolie, ummantelt. Dieses Abdichtungsband eignet sich besonders zur ausgleichenden Einlage zwischen zwei Bauteilen, z.B. zwei Metallbauteilen oder einem Metallbauteil und einem Betonbauteil. Diese Eignung ergibt sich durch die leichte Verformbarkeit des im Folienschlauch enthaltenen Bindemittels. Dadurch, dass das Bindemittel mit einer scheuerfesten, temperaturunabhängigen nicht klebenden Schicht ummantelt ist, kann der daraufgelegte Bauteil jederzeit wieder entfernt werden. Alternativ kann er bewusst mit z.B. einem doppelseitigen Klebeband daran fixiert werden. Durch den Folienmantel ist das Abdichtungsband auch gut lagerbar, z.B. in aufgerollter Form ohne an sich selbst zu haften. Der mit dem Abdichtungsband abgedichtete und nivellierte Bauteil kann sowohl statisch als auch dynamisch belastet werden. Im Gegensatz zur Verwendung von flüssigen Ausgleichsmassen kommt es zu keinem Ablaufen von Masse während des Ausgleichs von Niveauunterschieden für Flächen, die keine Begrenzung aufweisen, und es müssen nicht wie bei Flüssigprodukten temperaturbedingte lange Aushärtungszeiten berücksichtigt werden, d.h. der Einbau des erfindungsgemäßen Abdichtungsbandes verkürzt die Einbauzeit, da es sofort mechanisch belastbar ist. Die Anwendung des Bandes ist temperatur- und wetterunabhängig.

Bevorzugt enthält das im Bandkörper enthaltene reaktiv aushärtende, bitumenhaltige Bindemittel 30 bis 90 Gew.-%, insbesondere 50 bis 80 Gew.-%, besonders bevorzugt 50 bis 65 Gew.-% eines Basisbindemittels höherer Viskosität, 5 bis 70 Gew.-%, insbesondere 5 bis 40 Gew.-%, besonders bevorzugt 30 bis 40 Gew.-%, eines Fluxöls zur Herabsetzung der Viskosität und gegebenenfalls 1 bis 20 Gew.-%, insbesondere 1 bis 10 Gew.-%, besonders bevorzugt 5 bis 10 Gew.-%, eines reaktionsauslösenden oder -beschleunigenden Aktivators, sowie auf 100 Teile der genannten Komponenten 10 bis 40 Teile, insbesondere 10 bis 30 Teile, besonders bevorzugt 5 bis 10 Teile, eines die viskostätserniedrigende Wirkung des Fluxöls vermindernden Reaktivzusatzes.

Dabei können vorzugsweise im Bandkörper als Basisbindemittel ein oder mehrere Stoffe aus der folgende Gruppe enthalten sein: Erdöldestillations-Bitumen der Penetrationsklassen B 1 bis B 500, vorzugsweise B 25 bis B 300, oder entsprechende geblasene (oxidierte) Bitumen, polymermodifizierte Bitumen, Naturasphalte, Montanwachs, Braunkohlenpeche, Teer oder Teerpeche, Destillationsrückstände aus der Verarbeitung natürlicher tierischer oder pflanzlicher Fette und Öle, beispielsweise Stearinpech, Sulfatpech in ihrer natürlichen oder in einer gehärteten Form, Wachse und Paraffine, natürliche und synthetische, Naturharze, wie beispielsweise Kolophonium und andere Baumharze, Schellack, Naturkautschuk, synthetische Harze und Polymere, wie beispielsweise Polyolefine, Cumaron-Indenharze, Polyacrylate, Alkydharze, Elastomere, wie Styrol-Butadienkautschuk und andere, sowie diverse Abmischungen einzelner miteinander verträglicher angeführter Komponenten.

Ferner sind vorzugsweise im Bandkörper als Fluxöl ein oder mehrere Stoffe aus der folgende Gruppe enthalten: schwerflüchtige Öle auf Mineralölbasis (Gasöl bis Schmierölfraktionen), Teeröle, pflanzliche und tierische Fette und Öle sowie deren funktionelle Derivate, wie Umesterungsprodukte und Verseifungsprodukte oder Gemische davon, gesättigte und ungesättigte organische mono-, di- oder tri-Carbonsäuren mit 6 bis 24 C-Atomen, gegebenenfalls auch verzweigte Carbonsäuren, niedermolekulare flüssige synthetische Polymere (technische Weichmacher, sogenannte Polyöle, Silikonöle), ausgenommen leichtflüchtige Stoffe, die dem Begriff Lösemittel zuzuordnen sind.

Und als Reaktivzusatz sind im Bandkörper ein oder mehrere Stoffe aus der folgende Gruppe enthalten: organische und anorganische Pulver und Flüssigkeiten, die in der Lage sind, mit der jeweils entsprechenden Komponente, Fluxöl oder Basisbindemittel, in geeigneter Weise (kalthärtend) zu reagieren, wie beispielsweise (Chelat)komplexbildner, Säureanhydride, mehrwertige Alkohole und Carbonsäuren, Fettamine, anorganische Salze ein- und mehrwertiger Kationen und Anionen, Portlandzement, Schnell- oder Spezialzemente, Kalk oder Gips in seinen verschiedenen Modifikationen, Dolomit, Flugasche und Schlacken, Gläser und Wasserglas, Kieselgele, Alaune.

Vorteilhafterweise enthält das im Bandkörper enthaltene reaktiv aushärtende Bindemittel einen Aktivator, der aus ein oder mehreren Stoffe aus der folgende Gruppe besteht: Wasser, Glykole, Fettalkohole, Tenside (anionische, nichtionische oder kationische) oder deren Lösungen in Wasser oder anderen Lösungsmitteln, organische oder anorganische Säuren und Laugen, Metallsalze, Schwefel und seine Verbindungen, Peroxide, Latex oder Kunstharzdispersionen.

Vorzugsweise hat das Abdichtungsband zur Verwendung als Abdichtung zwischen einem kalten Element, wie einer erkalteten Asphaltschicht, einem in eine Asphaltschicht einzubauenden oder an eine Asphaltschicht anschließenden Objekt, und einer zu einem späteren Zeitpunkt heiß eingebauten, angrenzenden Asphaltschicht, eine Zone zur Aufbringung auf die Flanke des kalten Elements und eine Zone für die Aufbringung auf einen an die Flanke anschließenden horizontalen Bereich des kalten Elements.

Dabei hat vorzugsweise die Zone zur Aufbringung auf die Flanke des kalten Elements eine größere Dicke als die Zone für die Aufbringung auf einen an die Flanke anschließenden horizontalen Bereich des kalten Elements.

Gemäß einer bevorzugten Ausführungsform ist die Breite der Zone zur Aufbringung auf die Flanke des kalten Elements ein- bis viermal, vorzugsweise zwei- bis dreimal der Breite der Zone für die Aufbringung auf einen an die Flanke anschließenden horizontalen Bereich des kalten Elements.

Ein solches Abdichtungsband kann zum Abdichten einer Fuge zwischen einem kalten Element und einer zu einem späteren Zeitpunkt heiß eingebauten, angrenzenden Asphaltschicht erfindungsgemäß wie folgt verwendet werden:
- das Abdichtungsband wird mit der Zone zur Aufbringung auf die Flanke des kalten Elements mit der Flanke des kalten Elements verbunden, und dann wird das Abdichtungsband mit der Zone für die Aufbringung auf einen an die Flanke anschließenden horizontalen Bereich des kalten Elements mit dem an die Flanke anschließenden horizontalen Bereich des kalten Elements verbunden, oder
- das Abdichtungsband wird mit der Zone für die Aufbringung auf einen an die Flanke anschließenden horizontalen Bereich des kalten Elements mit dem an die Flanke anschließenden horizontalen Bereich des kalten Elements verbunden, und dann wird das Abdichtungsband wird mit der Zone zur Aufbringung auf die Flanke des kalten Elements mit der Flanke des kalten Elements verbunden,

- und danach wird die Asphaltschicht heiß eingebaut und
- schließlich werden die heiße Asphaltschicht und der an die Flanke anschließende horizontale Bereich des kalten Elements gewalzt.

Da insbesondere der Aspekt der Abdichtung der zumeist mangelhaft verdichteten Flanke der kalten Asphaltbahn von großer Bedeutung für die Dauerhaftigkeit ist, kann die Verlegung mit einem solchen Abdichtungsband durch Anbringen sowohl auf der seitlichen Flanke der Asphaltbahn als auch auf der horizontalen Fläche erfolgen. Beispielsweise wird beim Einbau auf einer 4 cm dicken Deckschicht ein Nahtfolienband mit 6 cm Breite auf der Flankenkante so aufgelegt, dass es 3,6 cm der abwärts geneigten Flanke abdeckt und 1,5 cm der horizontalen Oberfläche. Es wird also über die Flankenkante gebogen ("geknickter Einbau"). Damit werden erfindungsgemäß zwei wesentliche Effekte erzielt: Es wird ein definierter Abdichtungszustand der Randzone der kalten Asphaltbahn sichergestellt, denn die vom Walzen der frisch verlegten Heißasphaltbahn heiße Walzenbandage presst den 1,5-cm-Rand auf eine Zone von bis zu 10 cm auseinander und gewährleistet auf diese Weise die zuverlässige Abdichtung des hohlraumreichen Asphaltes mit einem hochwertigen, dicken Bindemittelfilm, der einer Versiegelung der oberflächig zugänglichen Hohlräume entspricht. Zudem wird das abdichtende Material nicht auf beide Seiten des Nahtbereiches verschleppt, wie es beim herkömmlichen Fugenband mit der "Nietkopf-Walztechnik" erfolgt. Durch den "geknickten Einbau" wird als zweiter wesentlicher Vorteil die völlige Unempfindlichkeit des Nahtbandes gegen das häufig nicht vermeidbare Befahren durch den Baustellenverkehr erreicht. Das Befahren der Nahtflanke vor dem Einbau der zweiten Asphaltbahn erzeugt somit im Gegensatz zur herkömmlichen Einbaumethode eines Fugenbandes keine qualitätsmindernde Schwachstelle im Nahtbereich. Zur Optimierung des geknickten Einbaus ist es auch erfindungsgemäß vorgesehen, in einer Ausführungsvariante ein Nahtfolienband zu fertigen, dessen Schichtdicke auf einer Seite dünner ist. So kann zum Beispiel die Zone für die horizontale Anbringung 2 mm und die Zone für die vertikale Anbringung 5 mm dick sein.

Die Verlegung des Nahtfolienbandes kann durch einfache Maschinen erleichtert und präzisiert werden, etwa durch eine per Hand geführte Abrollvorrichtung, die das Schutzpapier abtrennt und mittels einer Andrückrolle mit dem Profil der horizontalvertikalen Flankenform das Nahtfolienband abknickt und gleichmäßig an die horizontale und vertikale Flanke der kalten Fertigerbahn andrückt.

Zur erfindungsgemäßen Herstellung eines selbstklebenden Abdichtungsbandes gemäß der Erfindung
- wird eine Klebefolie bereitgestellt, die auf einer Klebstoff aufweisenden Seite mit einem Schutzpapier oder einer Schutzfolie abgedeckt ist,
- wird eine Gussmasse mit reaktiv härtendem, bitumenhaltigem Bindemittel aus seinen miteinander reagierenden Komponenten hergestellt und
- noch im fließfähigen Zustand auf die dem Schutzpapier oder der Schutzfolie abgewandten Seite der Klebefolie, die vorzugsweise ebenfalls mit Klebstoff beschichtet ist, aufgebracht und dort erstarren gelassen.

Vorzugsweise wird nach Erstarren der Gussmasse der Gussmasse-Klebefolie-Verbund in Streifen geschnitten.

Während herkömmliche Fugenbänder im Heißverfahren (Gießtemperaturen oder Extrusionstemperaturen zwischen 120 und 200 °C) hergestellt werden, erfolgt die fabriksmäßige Fertigung des erfindungsgemäßen Nahtfolienbandes bei Raumtemperatur. Daher ist es möglich, handelsübliche Klebefolienbänder mit einer Dicke von <0,2 mm als Basis für die Klebeschicht zu verwenden, die keine besonders hohe Temperaturbeständigkeit aufweisen müssen. Die Klebefolie wird zunächst auf der Fertigungsstraße mit dem Schutzpapier nach unten aufgelegt und mit der im kalten Zustand fließfähigen Reaktivbitumenmasse (Patent Nr. 406 375) in der gewünschten Schichtdicke begossen. Die 2-komponentige Reaktivbitumenmasse wird aus den Lagertanks in eine entsprechende handelsübliche 2-Komponenten-Vergießmaschine gefördert, die beiden Materialströme werden über Dosierpumpen in einer Durchlaufmischdüse gemischt und direkt auf die Klebeschicht der Klebefolie gegossen. Die Dosierleistung der Dosierpumpen für die beiden Komponenten des Reaktivbitumens wird dabei in Abhängigkeit von der Vorschubgeschwindigkeit der Vergießstrecke so gesteuert, dass die beabsichtigte Materialdicke erreicht wird. Unmittelbar nach dem Austreten des Materialstranges aus der Durchlaufmischdüse kann die Masse noch verlaufen, aber es setzt die Aushärtungsreaktion so rasch ein, dass das Folienband etwa nach 5 Minuten aufgerollt werden kann, ohne an der Schutzfolie des Klebefolienbandes festzukleben. Durch das reaktive Aushärten des Reaktivbitumens verbindet sich die Klebeschicht der Klebefolie besonders intensiv mit der Reaktivbitumenmasse. Im anfänglich flüssigen Zustand kann die Klebeschicht gut benetzt bzw. teilweise durchdrungen und gequollen werden, es entsteht daher ein reaktives Einbinden der Klebeschicht in das eigentliche Nahtfolienmaterial. Nach dem Aushärten dient das Abdeckpapier der ursprünglichen Klebefolie auch als Trennlage gegenüber dem aufgerollten Nahtfolienband, die Verwendung eines weiteren Trennpapiers ist also nicht erforderlich. Alternativ könnte die Klebefolie auch nachträglich, also erst nach dem Aushärten auf das Reaktivbitumen aufkaschiert werden.

Im Folgenden wird kurz ein Ausführungsbeispiel für die Herstellung eines erfindungsgemäßen Abdichtungsbandes beschrieben. In 100 Gewichtsteile einer Mischung aus 50- 80 Gew.-% Bitumen, z.B. des Typs 160/220, als Basisbindemittel, 5 -40 Gew.-% Fettsäuregemisch als Fluxöl und 1-10 Gew.-% Natur- oder Synthese-Kautschuklatex als Aktivator werden 30 Gewichtsteile Zement als Reaktivzusatz mittels einer Durchlauf-Mischvorrichtung homogen eingemischt. Diese Masse wird auf eine Seite einer kommerziell erhältlichen doppelseitigen Klebefolie, z.B. das doppelseitige Klebeband mit PVC- oder Vliesträger der Fa. 3M, aufgegossen. Die so hergestellte Schicht härtet innerhalb von 5 bis 10 Minuten. Danach kann das Produkt gegebenenfalls zugeschnitten werden und aufgerollt werden, wobei das die nicht mit der bitumenhaltigen Schicht beschichtete Klebeschicht abdeckende Schutzpapier gleichzeitig als Trennpapier beim Aufwickeln dient.

Für eine andere Anwendung wird ein Abdichtungsband erfindungsgemäß hergestellt, indem ein Kunststofffolienschlauch, vorzugsweise ein Polyethylenfolienschlauch, bereitgestellt wird, eine Gussmasse mit reaktiv härtendem, bitumenhaltigen Bindemittel aus seinen miteinander reagierenden Komponenten hergestellt wird, und in den Kunststofffolienschlauch eingefüllt wird und darin erstarren gelassen wird, wobei der gefüllte Kunststofffolienschlauch während des Erstarrens vorzugsweise flach gedrückt wird. Nach dem Erstarren hat das Abdichtungsband z.B. eine Breite von 5,5 cm und eine Höhe von 0,3 cm und es kann aufgerollt gelagert und transportiert werden. Bei Bedarf können Streifen oder Plättchen beliebiger Länge abgeschnitten und verwendet werden.

Eine Verwendung des erfindungsgemäßen Abdichtungsbandes, das nach dem zuerst genannten Verfahren hergestellt wurde, ist die Verwendung als Nahtband zur Abdichtung einer Naht zwischen einer ersten Asphaltbahn und einer zweiten zu einem späteren Zeitpunkt eingebauten Asphaltbahn. Mit dem erfindungsgemäßen völlig neuartigen Nahtband, das für die sachgerechte Ausbildung von Nähten und Anschlüssen im großflächigen Straßenbau, in der Längsnaht und auch bei Tagesstößen aber auch bei Reparaturarbeiten, wie Fensterfräsungen, Künetten und Einbauten von Schächten anwendbar ist, können viele der oben angeführten Nachteile und Schwachstellen der Nahtbänder des Standes der Technik beseitigt werden.

Eine andere Verwendung ist die Verwendung zur Abdichtung einer Fuge zwischen einer Asphaltschicht und einem in die Asphaltschicht eingebauten oder an die Asphaltschicht angebauten Objekt.

Eine weitere Verwendung des Abdichtungsbandes ist die Verwendung zur Abdichtung von Rissen in einer Asphaltschicht.

Ein noch weitere Verwendung des Abdichtungsbandes ist die Verwendung als SAMI-Schichte zwischen einer reparaturbedürftigen Asphaltschicht und einer Asphaltdeckschicht.

Auch eine Verwendung des Abdichtungsbandes zum Abdichten und Ausgleichen der Fuge zwischen zwei aneinandergefügten Bauteilen, z.B. Bauteilen aus Metall und/oder Betonfertigteilen, ist denkbar.

Der Einsatzbereich des erfindungsgemäßen Abdichtungsbandes ist vielseitig und nicht auf die Anwendung zur Optimierung von Nähten und Anschlüssen im Straßenbau eingeschränkt. Die Abdichtung von Straßenoberflächen mit linearen Rissen oder Netzrissen ist durch Aufkleben entsprechend breiter Folien, vorzugsweise hergestellt in 10 bis 100 cm breiten Bahnen, auf sehr einfache Weise möglich und ist besonders dann wirtschaftlich, wenn es sich nicht um großflächige sondern um vereinzelt auftretende kleinflächige Schadensbilder handelt, verursacht etwa durch lokale Frosthebungen. Üblicherweise wird eine derartige Folie dann mit einer entsprechenden Asphaltdeckschicht überbaut. Die Folie sorgt einerseits für die Abdichtung der Risse, anderseits bildet sie eine gewünschte "Entkopplung" der neu aufgebrachten Asphaltschicht von der Unterlage, sodass das Durchschlagen eines Reflexionsrisses unterbunden, zumindest aber zeitlich stark verzögert wird. Man erhält auf sehr komfortable Weise ohne großen Aufwand an Arbeitsmaschinen eine sogenannte SAMI-Schichte (Stress Absorbing Membrane Interlayer), die üblicherweise sonst mit aufwändigen großen Arbeitsmaschinen im Heißsprühverfahren bei 180 bis 200 °C hergestellt werden müssen, deren Einsatz sich erst ab einer Fläche von 5000 m² als wirtschaftlich vertretbar erweist.

Eine weitere Anwendung erstreckt sich auf Gebäude gegebenenfalls auch auf Brücken. Häufig sind aneinandergefügte Betonfertigteilplatten abzudichten oder der Übergangsbereich der Bodenplatte auf die Wände. Besonders diese letztere Anwendung erfordert das Aufbringen einer dichten Schichte, deren Verlauf durch Ausbildung einer Hohlkehle besonders risseüberbrückend zu gestalten ist. Dafür ist das Abdichtungsband, gefertigt in einer Breite von 20 bis 40 cm, sehr gut geeignet.

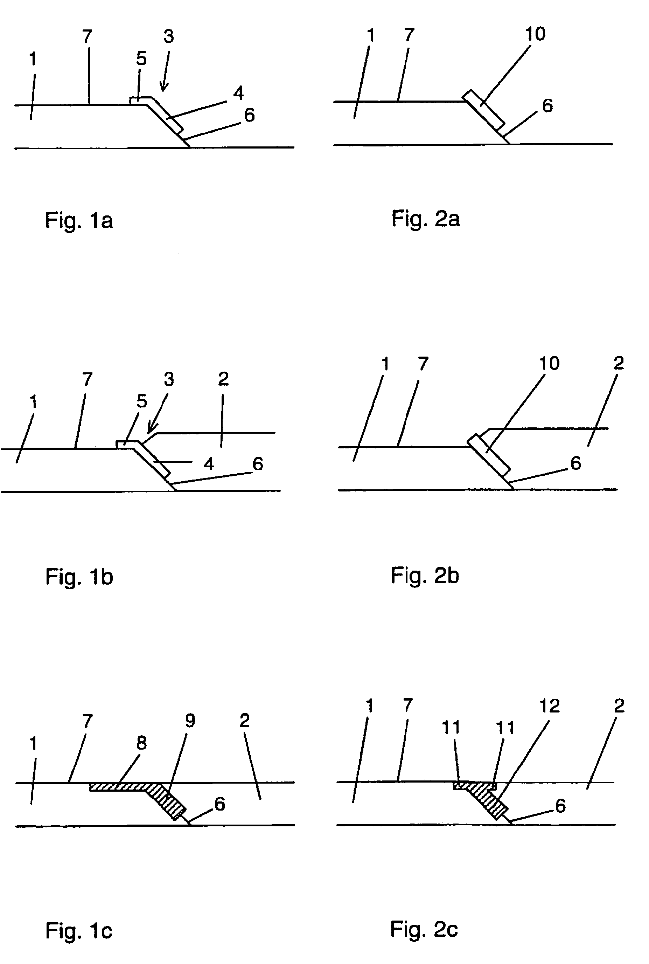

Zur Veranschaulichung der Erfindung ist in den Zeichnungen schematisch die Verwendung des erfindungsgemäßen Abdichtungsbandes als Nahtband zwischen zwei Asphaltbahnen einer Asphaltdeckschicht im Vergleich zu der Verwendung eines Nahtbandes des Standes der Technik zu diesem Zweck dargestellt. Dabei zeigen die Figuren 1a bis 1c das erfindungsgemäße Abdichtungsband in verschiedenen Einbauschritten und die Figuren 2a bis 2c zeigen das Nahtband des Standes der Technik in analogen Einbauschritten. In den Zeichnungen ist die Straße im Querprofil dargestellt.

Die Figuren 1a und 2a zeigen jeweils auf der linken Seite eine bereits eingebaute abgekühlte Asphaltbahn 1, die in ihrem Randbereich, d.h. im Bereich der Flanke 6 aufgrund des fehlenden Widerlagers weniger stark verdichtet ist als in ihren übrigen Bereichen. Das erfindungsgemäße Abdichtungsband 3 ist mit einer Zone 4 an die Flanke 6 und mit einer Zone 5 an den an die Flanke 6 anschließenden horizontalen Bereich 7 der kalten Asphaltbahn 1 geklebt, wobei das Abdichtungsband in der Zone 5 dünner sein kann als in der Zone 4. Zur einfachen Handhabung auf der Baustelle, kann das Abdichtungsband einseitig mit einer Klebeschicht versehen sein, die mit einer Schutzfolie abgedeckt ist. Nach Abziehen der Schutzfolie kann das Abdichtungsband zuerst mit einer Zone an der Flanke 6 oder am horizontalen Bereich 7 angeklebt werden und dann kann es durch Umknicken mit der anderen Zone am horizontalen Bereich 7 bzw. an der Flanke 6 angeklebt werden. Das Nahtband 10 des Standes der Technik wird hingegen nur an der Flanke 6 angeklebt und zwar so, dass es über die Ebene des horizontalen Bereichs 7 einige Millimeter hinaussteht. Beim Vergleich der Figuren 1a und 2a ist es offensichtlich, dass beim Überfahren mit Baustellenfahrzeugen des erfindungsgemäßen Abdichtungsbandes 3, das über seine gesamte Breite angeklebt ist, die Gefahr des Ablösens des Bandes 3 geringer ist als bei dem Nahtband 10 des Standes der Technik, das über die Ebene des horizontalen Bereichs 7 der Asphaltbahn 1 hinaussteht. In den Zeichnungen sind die Dicke und die Breite des erfindungsgemäßen Abdichtungsbandes 3 und des Nahtbandes 10 des Standes der Technik nicht maßstabgetreu wiedergegeben. Dennoch wurde versucht darzustellen, dass das erfindungsgemäße Abdichtungsband 3 aufgrund seiner besonderen Zusammensetzung dünner ausgeführt werden kann als das Nahtband 10 des Standes der Technik ohne Beweglichkeit bei Scherbeanspruchung einzubüßen oder früher zu ermüden.

In den Figuren 1b und 2b ist schematisch eine anschließend an die Flanke 6 der kalten Asphaltbahn 1 aufgebrachte heiße noch nicht verdichtete Asphaltbahn 2 gezeigt. Die Wärme der heißen Asphaltbahn 2 bewirkt das Schmelzen des Abdichtungsbandes 3 bzw. des Nahtbandes 10. Die reduzierte Dicke des erfindungsgemäßen Abdichtungsbandes 3 erlaubt ein vollständigeres Schmelzen des Abdichtungsbandes 3 als beim Nahtband 10 des Standes der Technik. Folglich kann das Bindemittel aus dem Abdichtungsband beim anschließenden Walzen besser in den Randbereich der kalten Asphaltbahn 1 eindringen und es ergibt sich ein besserer Kraftschluss zwischen den Asphaltbahnen 1 und 2 und eine bessere Abdichtung des hohlraumreichen Randbereichs der Asphaltbahn 1 durch einen dicken bitumenreichen Bindemittelfilm 8, der einer Versiegelung der oberflächig zugänglichen Hohlräume entspricht.

Die Figuren 1c und 2c zeigen schließlich schematisch die beiden Asphaltbahnen 1 und 2 nach dem Walzen der später heiß eingebauten Asphaltbahn 2. Wie man sieht hat die Asphaltbahn 2 nach dem Walzen und Verdichten nun das gleiche Niveau wie die zuerst eingebaute Asphaltbahn 1. Die schraffierten Bereiche 8, 9, 11, 12 veranschaulichen das Eindringen von Bindemittel aus dem erfindungsgemäßen Abdichtungsband 3 bzw. dem Nahtband 10 des Standes der Technik in die aneinandergrenzenden Randbereiche der Asphaltbahnen 1 und 2. Deutlich erkennt man, dass der Nietkopf 11, der sich aus dem Walzen des Nahtbandes 10 des Standes der Technik ergibt, den Übergangsbereich weit weniger überdeckt als der Bereich 8, der sich aus dem Walzen der Zone 5 des erfindungsgemäßen Abdichtungsbandes 3 ergibt. Die auf den horizontale Bereich 7 der Asphaltbahn 1 aufgebrachte Zone 5 des Abdichtungsbandes 3 wird durch die heiße Bandage der Verdichtungswalze ebenfalls teilweise geschmolzen und wird von der Walze über die kalte Asphaltbahn 1 auf einen breiteren Bereich ausgewalkt und in den von oben zugänglichen Hohlraum hineingepresst. Daher erfolgt auch in diesem Bereich eine Bindemittelanreicherung und die Abdichtung dieser ursprünglich wasserdurchlässigen Schwachstelle wird sichergestellt. Ferner ist angedeutet, dass, obwohl und weil das Abdichtungsband 3 dünner ist als das Nahtband 10, die Bereiche 9 und 12 an der Flanke 6 gleich breit sind, da beim erfindungsgemäßen Abdichtungsband 3 dieses besser durchgeschmolzen wird, so dass das bitumenhaltige Bindemittel besser eindringen kann. Diese hier dargestellte Form der erfindungsgemäßen Nahtbehandlung ist dem Nietkopf des Standes der Technik in Hinblick auf den asphalttechnischen Nutzen überlegen.

Das erfindungsgemäße vorzugsweise selbstklebende bitumenhaltige folienartige Material kann auf kaltem Wege hergestellt werden und daher mit einer vorgefertigten Klebebandfolie kombiniert werden, ohne diese Folie durch Hitzeeinwirkung beim Fertigungsvorgang zu zerstören. Ermöglicht wird die Kaltherstellung durch das zugrunde liegende Reaktivbitumen-Materialkonzept, das eine nachwachsende Rohstoffbasis von rund einem Drittel des Gesamtmaterials beinhaltet. Der fabriksmäßige Herstellungsvorgang ist energiesparsam und daher umweltfreundlich. Die Erfindung erstreckt sich auch auf die besondere Art der kalten Verarbeitung beim Bausteileneinsatz im Asphaltstraßenbau durch einen "geknickten" Einbau, sowie die Nutzung in Form einer mehrere Dezimeter breiten Folie zur Abdichtung rissiger Unterlagen und Fugen in Gebäuden und Straßen.

## Patentansprüche

1. Abdichtungsband mit einem bitumenhaltiges Bindemittel enthaltenden Bandkörper, **dadurch gekennzeichnet, dass** das bitumenhaltige Bindemittel ein reaktiv aushärtendes, bitumenhaltiges Bindemittel ist, das auf bis zu 50 %, vorzugsweise 20 bis 50 % nachwachsenden Rohstoffen basiert.

2. Abdichtungsband nach Anspruch 1, **dadurch gekennzeichnet, dass** der Bandkörper 90 bis 100 Gew.-%, insbesondere 100 Gew.-%, reaktiv aushärtendes Bindemittel enthält.

3. Abdichtungsband nach Anspruch 1 oder 2, **dadurch gekennzeichnet, dass** das im Bandkörper enthaltene reaktiv aushärtende, bitumenhaltige Bindemittel 30 bis 90 Gew.-%, insbesondere 50 bis 80 Gew.-%, besonders bevorzugt 50 bis 65 Gew.-% eines Basisbindemittels höherer Viskosität, 5 bis 70 Gew.-%, insbesondere 5 bis 40 Gew.-%, besonders bevorzugt 30 bis 40 Gew.-%, eines Fluxöls zur Herabsetzung der Viskosität und gegebenenfalls 1 bis 20 Gew.-%, insbesondere 1 bis 10 Gew.-%, besonders bevorzugt 5 bis 10 Gew.-%, eines reaktionsauslösenden oder-beschleunigenden Aktivators, sowie auf 100 Teile der genannten Komponenten 10 bis 40 Teile, insbesondere 10 bis 30 Teile, besonders bevorzugt 5 bis 10 Teile, eines die viskostätserniedrigende Wirkung des Fluxöls vermindernden Reaktivzusatzes enthält.

4. Abdichtungsband nach Anspruch 3, **dadurch gekennzeichnet, dass** im Bandkörper als Basisbindemittel ein oder mehrere Stoffe aus der folgende Gruppe enthalten sind: Erdöldestillations-Bitumen der Penetrationsklassen B 1 bis B 500, vorzugsweise B 25 bis B 300, oder entsprechende geblasene (oxidierte) Bitumen, polymermodifizierte Bitumen, Naturasphalte, Montanwachs, Braunkohlenpeche, Teer oder Teerpeche, Destillationsrückstände aus der Verarbeitung natürlicher tierischer oder pflanzlicher Fette und Öle, beispielsweise Stearinpech, Sulfatpech in ihrer natürlichen oder in einer gehärteten Form, Wachse und Paraffine, natürliche und synthetische, Naturharze, wie beispielsweise Kolophonium und andere Baumharze, Schellack, Naturkautschuk, synthetische Harze und Polymere, wie beispielsweise Polyolefine, Cumaron-Indenharze, Polyacrylate, Alkydharze, Elastomere, wie Styrol-Butadienkautschuk und andere, sowie diverse Abmischungen einzelner miteinander verträglicher angeführter Komponenten.

5. Abdichtungsband nach Anspruch 3 oder 4, **dadurch gekennzeichnet, dass** im Bandkörper als Fluxöl ein oder mehrere Stoffe aus der folgende Gruppe enthalten sind: schwerflüchtige Öle auf Mineralölbasis (Gasöl bis Schmierölfraktionen), Teeröle, pflanzliche und tierische Fette und Öle sowie deren funktionelle Derivate, wie Umesterungsprodukte und Verseifungsprodukte oder Gemische davon, gesättigte und ungesättigte organische mono-, di- oder tri-Carbonsäuren mit 6 bis 24 C-Atomen, gegebenenfalls auch verzweigte Carbonsäuren, niedermolekulare flüssige synthetische Polymere (technische Weichmacher, sogenannte Polyöle, Silikonöle), ausgenommen leichtflüchtige Stoffe, die dem Begriff Lösemittel zuzuordnen sind.

6. Abdichtungsband nach einem der Ansprüche 3 bis 5, **dadurch gekennzeichnet, dass** im Bandkörper als Reaktivzusatz ein oder mehrere Stoffe aus der folgende Gruppe enthalten sind: organische und anorganische Pulver und Flüssigkeiten, die in der Lage sind, mit der jeweils entsprechenden Komponente, Fluxöl oder Basisbindemittel, in geeigneter Weise (kalthärtend) zu reagieren, wie beispielsweise (Chelat)komplexbildner, Säureanhydride, mehrwertige Alkohole und Carbonsäuren, Fettamine, anorganische Salze ein- und mehrwertiger Kationen und Anionen, Portlandzement, Schnell- oder Spezialzemente, Kalk oder Gips in seinen verschiedenen Modifikationen, Dolomit, Flugasche und Schlacken, Gläser und Wasserglas, Kieselgele, Alaune.

7. Abdichtungsband nach einem der Ansprüche 3 bis 6, **dadurch gekennzeichnet, dass** das im Bandkörper enthaltene reaktiv aushärtende Bindemittel einen Aktivator enthält, der aus ein oder mehreren Stoffe aus der folgende Gruppe besteht: Wasser, Glykole, Fettalkohole, Tenside (anionische, nichtionische oder kationische) oder deren Lösungen in Wasser oder anderen Lösungsmitteln, organische oder anorganische Säuren und Laugen, Metallsalze, Schwefel und seine Verbindungen, Peroxide, Latex oder Kunstharzdispersionen.

8. Abdichtungsband nach einem der vorhergehenden Ansprüche, **dadurch gekennzeichnet, dass** der Bandkörper von einer Kunststofffolie, vorzugsweise einer Polyethylenfolie, ummantelt ist.

9. Abdichtungsband nach einem der vorhergehenden Ansprüche, **dadurch gekennzeichnet, dass** es auf mindestens einer Seite eine Klebeschicht, vorzugsweise in Form einer Klebefolie, aufweist.

10. Abdichtungsband nach einem der vorhergehenden Ansprüche, **dadurch gekennzeichnet, dass** das Abdichtungsband eine Dicke kleiner als 10 mm, vorzugsweise von 3 bis 6 mm hat.

11. Abdichtungsband nach einem der vorhergehenden Ansprüche zur Verwendung als Abdichtung zwischen einem kalten Element, wie einer erkalteten Asphaltschicht (1), einem in eine Asphaltschicht einzubauenden oder an eine Asphaltschicht anschließenden Objekt, und einer zu einem späteren Zeitpunkt heiß eingebauten, angrenzenden Asphaltschicht (2), **dadurch gekennzeichnet, dass** das Abdichtungsband (3) eine Zone (4) zur Aufbringung auf die Flanke (6) des kalten Elements (1) hat und eine Zone (5) für die Aufbringung auf einen an die Flanke (6) anschließenden horizontalen Bereich (7) des kalten Elements (1) hat, wobei die Zone (4) zur Aufbringung auf die Flanke (6) des kalten Elements (1) vorzugsweise eine größere Dicke hat als die Zone (5) für die Aufbringung auf einen an die Flanke (6) anschließenden horizontalen Bereich (7) des kalten Elements (1), wobei die Breite der Zone (4) zur Aufbringung auf die Flanke (6) des kalten Elements (1) vorzugsweise ein- bis viermal, besonders bevorzugt zwei- bis dreimal der Breite der Zone (5) für die Aufbringung auf einen an die Flanke (6) anschließenden horizontalen Bereich (7) des kalten Elements (1) ist.

12. Verfahren zum Abdichten einer Fuge zwischen einem kalten Element (1) und einer zu einem späteren Zeitpunkt heiß eingebauten, angrenzenden Asphaltschicht (2) unter Verwendung eines Abdichtungsbandes (3) nach Anspruch 11, **dadurch gekennzeichnet,**
- **dass** das Abdichtungsband (3) mit der Zone (4) zur Aufbringung auf die Flanke (6) des kalten Elements (1) mit der Flanke (6) des kalten Elements (1) verbunden wird und dann das Abdichtungsband (3) mit der Zone (5) für die Aufbringung auf einen an die Flanke (6) anschließenden horizontalen Bereich (7) des kalten Elements (1) mit dem an die Flanke (6) anschließenden horizontalen Bereich (7) des kalten Elements (1) verbunden wird, oder
- **dass** das Abdichtungsband (3) mit der Zone (5) für die Aufbringung auf einen an die Flanke (6) anschließenden horizontalen Bereich (7) des kalten Elements (1) mit dem an die Flanke (6) anschließenden horizontalen Bereich (7) des kalten Elements (1) verbunden wird und dann das Abdichtungsband (3) mit der Zone (4) zur Aufbringung auf die Flanke (6) des kalten Elements (1) mit der Flanke (6) des kalten Elements (1) verbunden wird,
- und **dass** danach die Asphaltschicht (2) heiß eingebaut wird und
- **dass** schließlich die heiße Asphaltschicht (2) und der an die Flanke (6) anschließende horizontale Bereich (7) des kalten Elements (1) gewalzt werden.

13. Verfahren zur Herstellung eines Abdichtungsbandes nach einem der Ansprüche 1 bis 7 und Anspruch 9, **dadurch gekennzeichnet, dass**
- eine Klebefolie bereitgestellt wird, die auf einer Klebstoff aufweisenden Seite mit einem Schutzpapier oder einer Schutzfolie abgedeckt ist,
- eine Gussmasse mit reaktiv härtendem, bitumenhaltigem Bindemittel aus seinen miteinander reagierenden Komponenten hergestellt wird und
- noch im fließfähigen Zustand auf die dem Schutzpapier oder der Schutzfolie abgewandten Seite der Klebefolie, die vorzugsweise ebenfalls mit Klebstoff beschichtet ist, aufgebracht wird und dort erstarren gelassen wird.

14. Verfahren nach Anspruch 13, **dadurch gekennzeichnet, dass** nach Erstarren der Gussmasse der Gussmasse-Klebefolie-Verbund in Streifen geschnitten wird.

15. Verfahren zur Herstellung eines Abdichtungsbandes nach Anspruch 8, **dadurch gekennzeichnet, dass**
- ein Kunststofffolienschlauch, vorzugsweise ein Polyethylenfolienschlauch, bereitgestellt wird,
- eine Gussmasse mit reaktiv härtendem, bitumenhaltigen Bindemittel aus seinen miteinander reagierenden Komponenten hergestellt wird, und
- in den Kunststofffolienschlauch eingefüllt wird und darin erstarren gelassen wird,
- wobei der gefüllte Kunststofffolienschlauch während des Erstarrens vorzugsweise flach gedrückt wird.

16. Verwendung des Abdichtungsbandes nach einem der Ansprüche 1 bis 11 bzw. eines nach Verfahren des Anspruchs 13 oder 14 hergestellten Abdichtungsbandes als Nahtband zur Abdichtung einer Naht zwischen einer ersten Asphaltbahn und einer zweiten zu einem späteren Zeitpunkt eingebauten Asphaltbahn.

17. Verwendung des Abdichtungsbandes nach einem der Ansprüche 1 bis 11 bzw. eines nach dem Verfahren des Anspruchs 13 oder 14 hergestellten Abdichtungsbandes zur Abdichtung einer Fuge zwischen einer Asphaltschicht und einem in die Asphaltschicht eingebauten oder an die Asphaltschicht angebauten Objekt.

18. Verwendung des Abdichtungsbandes nach einem der Ansprüche 1 bis 7 oder 9 bzw. eines nach Anspruch 13 oder 14 hergestellten Abdichtungsbandes zur Abdichtung von Rissen in einer Asphaltschicht.

19. Verwendung des Abdichtungsbandes nach einem der Ansprüche 1 bis 7 oder 9 bzw. eines nach Anspruch 13 oder 14 hergestellten Abdichtungsbandes als SAMI-Schichte zwischen einer reparaturbedürftigen Asphaltschicht und einer Asphaltdeckschicht.

20. Verwendung des Abdichtungsbandes nach einem der Ansprüche 1 bis 10 bzw. eines nach Anspruch 13, 14 oder 15 hergestellten Abdichtungsbandes zum Abdichten und Ausgleichen der Fuge zwischen zwei aneinandergefügten Bauteilen aus Beton und/oder Metall.

## Claims

1. A sealing tape with a tape body containing a bituminous binding agent, **characterized in that** the bituminous binding agent is a reactively hardening bituminous binding agent which is based on up to 50 %, preferably 20 to 50 %, renewable raw materials.

2. The sealing tape according to claim 1, **characterized in that** the tape body contains 90 to 100 % by wt., in particular 100 % by wt., reactively hardening binding agent.

3. The sealing tape according to claim 1 or 2, **characterized in that** the reactively hardening bituminous binding agent contained in the tape body contains 30 to 90 % by wt., in particular 50 to 80 % by wt., particularly preferably 50 to 65 % by wt., of a basic binding agent with a relatively high viscosity, 5 to 70 % by wt., in particular 5 to 40 % by wt., particularly preferably 30 to 40 % by wt., of a flux oil to reduce the viscosity and, where necessary, 1 to 20 % by wt., in particular 1 to 10 % by wt., particularly preferably 5 to 10 % by wt., of a reaction-triggering or reaction-accelerating activator, and also for 100 parts of the aforementioned components, 10 to 40 parts, in particular 10 to 30 parts, particularly preferably 5 to 10 parts, of a reactive additive reducing the viscosity-lowering effect of the flux oil.

4. The sealing tape according to claim 3, **characterized in that** one or a plurality of substances from the following group is/are contained in the tape body as the basic binding agent: crude oil distillation bitumen of penetration grades B 1 to B 500, preferably B 25 to B 300 or corresponding blown (oxidized) bitumen, polymer-modified bitumen, natural asphalts, montan wax, lignite pitches, tar or tar pitches, distillation residues from the processing of natural animal or vegetable fats and oils, for example stearic pitch, sulphate pitch in its natural or in a hardened form, waxes and paraffins, natural and synthetic, natural resins such as colophonium and other tree resins, shellac, natural rubber, synthetic resins and polymers such as polyolefins, for example, curamone-indene resins, polyacrylates, alkyd resins, elastomers and styrene butadiene rubber and others, as well as different blends of individual components compatible with one another.

5. The sealing tape according to claim 3 or 4, **characterized in that** one or a plurality of substances from the following group is/are contained in the tape body as flux oil: non-volatile oils based on mineral oil (gas oil to lubricating oil fractions), creosotes, vegetable and animal fats and oils and also their functional derivatives, such as ester exchange products and saponification products or mixtures thereof, saturated and unsaturated organic mono-, di- or tri-carbonic acids with 6 to 24 C atoms, possibly also branched carbonic acids, low-molecular liquid synthetic polymers (technical softeners, so-called polyoils, silicon oils), except for readily volatile substances which must be assigned to the solvents category.

6. The sealing tape according to one of claims 3 to 5, **characterized in that** one or a plurality of substances from the following group is/are contained in the tape body as a reactive additive: organic and inorganic powders and liquids which are capable of reacting in a suitable manner (cold hardening) with the corresponding components, flux oil or basic binding agent in each case, such as, for example, (chelating) complexing agents, acid anhydrides, polyvalent alcohols and carbonic acids, fatty amines, inorganic salts of monoand polyvalent cations and anions, Portland cement, rapid and special cements, chalk or plaster in its different modifications, dolomite, fly ash and slag, glasses and soluble glass, silica gels, alums.

7. The sealing tape according to one of claims 3 to 6, **characterized in that** the reactively hardening binding agent contained in the tape body contains an activator which comprises one or a plurality of substances from the following group: water, glycols, fatty alcohols, surfactants (anionic, non-ionic or cationic) or solutions thereof in water or other solvents, organic or inorganic acids and lyes, metal salts, sulphur and compounds thereof, peroxides, latex or synthetic resin dispersions.

8. The sealing tape according to one of the preceding claims, **characterized in that** the tape body is encased by a plastic film, preferably a polyurethane film.

9. The sealing tape according to one of the preceding claims, **characterized in that** it has an adhesive layer on at least one side, preferably in the form of an adhesive film.

10. The sealing tape according to one of the preceding claims, **characterized in that** the sealing tape has a thickness of less than 10 mm, preferably of 3 to 6 mm.

11. The sealing tape according to one of the preceding claims for use as a seal between a cold element, such as a cooled asphalt layer (1), an object to be incorporated in an asphalt layer or joined to an asphalt layer and an adjacent asphalt layer (2) added hot at a later point in time, **characterized in that** the sealing tape (3) has a zone (4) for applying to the edge (6) of the cold element (1) and a zone (5) for applying to a horizontal region (7) of the cold element (1) adjacent to the edge (6), wherein the zone (4) for applying to the edge (6) of the cold element (1) preferably has a greater thickness than the zone (5) for applying to a horizontal region (7) of the cold element (1) adjacent to the edge (6), wherein the width of the zone (4) for applying to the edge (6) of the cold element (1) is preferably one to four times, particularly preferably two to three times, the width of the zone (5) for application to a horizontal region (7) of the cold element (1) adjacent to the edge (6).

12. A method of sealing a joint between a cold element (1) and an adjacent asphalt layer (2) applied hot at a later point in time using a sealing tape (3) according to claim 11, **characterized in that**
- the sealing tape (3) with the zone (4) for application to the edge (6) of the cold element (1) is connected to the edge (6) of the cold element (1) and then the sealing tape (3) with the zone (5) for application to a horizontal region (7) of the cold element (1) adjacent to the edge (6) is connected to the horizontal region (7) of the cold element (1) adjacent to the edge (6), or
- the sealing tape (3) with the zone (5) for application to a horizontal region (7) of the cold element (1) adjacent to the edge (6) is connected to the horizontal region (7) of the cold element (1) adjacent to the edge (6) and then the sealing tape (3) with the zone (4) for application to the edge (6) of the cold element (1) is connected to the edge (6) of the cold element (1),
- and the asphalt layer (2) is then added hot and
- the hot asphalt layer (2) and the horizontal region (7) of the cold element (1) adjacent to the edge (6) are finally rolled.

13. The method of producing a sealing tape according to one of claims 1 to 7 and claim 9, **characterized in that**
- an adhesive film is supplied which is covered with a protective paper or a protective film on a side exhibiting adhesive,
- a casting compound with a reactively hardening bituminous binding agent is produced from its components reacting with one another and,
- while still in the liquid state, is applied to the side of the adhesive film facing away from the protective paper or the protective film, which side is preferably likewise coated with adhesive, and allowed to solidify there.

14. The method according to claim 13, **characterized in that** the casting compound/adhesive film composite is cut into strips once the casting compound has solidified.

15. The method of producing a sealing tape according to claim 8, **characterized in that**
- a plastic film tube, preferably a polyethylene film tube, is supplied,
- a casting compound with a reactively hardening bituminous binding agent is produced from its components reacting with one another and
- poured into the plastic film tube and left to solidify therein,
- wherein the filled plastic film tube is preferably pressed flat during solidification.

16. Use of the sealing tape according to one of claims 1 to 11 or a sealing tape produced according to the method in claim 13 or 14 as a seam tape to seal a seam between a first asphalt track and a second asphalt track added at a later point in time.

17. Use of the sealing tape according to one of claims 1 to 11 or a sealing tape produced according to the method in claim 13 or 14 to seal a joint between an asphalt layer and an object integrated in the asphalt layer or added to the asphalt layer.

18. Use of the sealing tape according to one of claims 1 to 7 or 9 or else a sealing tape produced according to claim 13 or 14 for sealing cracks in an asphalt layer.

19. Use of the sealing tape according to one of claims 1 to 7 or 9 or else a sealing tape produced according to claim 13 or 14 as SAMI layer between an asphalt layer in need of repair and an asphalt surface layer.

20. Use of the sealing tape according to one of claims 1 to 10 or else a sealing tape produced according to claim 13, 14 or 15 for sealing and settling the joint between two joined-together components made of concrete and/or metal.

## Revendications

1. Ruban d'étanchéité comportant un corps de ruban contenant un liant à teneur en bitume, **caractérisé en ce que** le liant à teneur en bitume est un liant à teneur en bitume qui subit un processus de durcissement réactif et qui est basé sur des matières premières renouvelables dans une proportion pouvant atteindre jusqu'à 50 % et se situant préférentiellement entre 20 et 50 %.

2. Ruban d'étanchéité selon la revendication 1, **caractérisé en ce que** le corps de ruban contient 90 à 100 % en poids, notamment 100 % en poids, d'un liant subissant un processus de durcissement réactif.

3. Ruban d'étanchéité selon les revendications 1 ou 2, **caractérisé en ce que** le liant à teneur en bitume subissant un processus de durcissement réactif, lequel est contenu dans le corps de ruban, contient 30 à 90 % en poids, notamment 50 à 80 % en poids, avec une préférence particulière 50 à 65 % en poids, d'un liant de base à viscosité relativement élevée, 5 à 70 % en poids, notamment 5 à 40 % en poids, avec une préférence particulière 30 à 40 % en poids, d'une huile de fluxage destinée à réduire la viscosité, et éventuellement 1 à 20 % en poids, notamment 1 à 10 % en poids, avec une préférence particulière 5 à 10 % en poids, d'un activateur susceptible de déclencher ou d'accélérer la réaction ainsi que, sur 100 parties des composants susmentionnés, 10 à 40 parties, notamment 10 à 30 parties, avec une préférence particulière 5 à 10 parties, d'un additif de réaction destiné à diminuer l'effet de reduction de la viscosité de l'huile de fluxage.

4. Ruban d'étanchéité selon la revendication 3, **caractérisé en ce que** le corps de ruban contient, en tant que liant de base, un ou plusieurs produits appartenant au groupe suivant : bitumes issus de la distillation de pétrole dont le pouvoir pénétrant est classé B 1 à B 500, de préférence B 25 à B 300, lesdits bitumes ayant éventuellement subi un soufflage (une oxydation), bitumes modifiés aux polymères, asphaltes naturels, cire minérale, poix de lignite, goudron ou poix de goudron, résidus de distillation issus de la transformation de graisses et d'huiles naturelles d'origine animale ou végétale, s'agissant par exemple de poix stéarique, de poix de sulfate sous leurs formes naturelles ou hydrogénées, cires et paraffines d'origine naturelle ou synthétique, résines naturelles telle que la colophane et d'autres résines d'arbres, gomme-laque, caoutchouc naturel, résines et polymères synthétiques comme par exemple les polyoléfines, les résines coumarone-indène, les polyacrylates, les résines alkyde, les élastomères tels que le caoutchouc styrène-butadiène et d'autres, les composants mentionnés ci-dessus pouvant également être mélangés les uns aux autres, à condition qu'ils soient compatibles.

5. Ruban d'étanchéité selon les revendications 3 ou 4, **caractérisé en ce que** le corps de ruban contient, en tant qu'huile de fluxage, un ou plusieurs produits appartenant au groupe suivant : huiles lourdes à base d'huiles minérales (allant du gazole jusqu'aux fractions d'huile de lubrification), huiles de goudron, graisses et huiles d'origine végétale et animale ainsi que leurs dérivés fonctionnels tels que les produits de transestérification et les produits de saponification ou leurs mélanges, acides mono-, di- ou tricarboxyliques organiques saturés et insaturés renfermant 6 à 24 atomes de carbone, s'agissant éventuellement d'acides carboxyliques ramifiés, polymères synthétiques liquides à faible masse moléculaire (plastifiants techniques, huiles à base de polybutadiène, huiles de silicone), à l'exception de produits volatils pouvant être désignés par le terme solvant.

6. Ruban d'étanchéité selon les revendications 3 à 5, **caractérisé en ce que** le corps de ruban contient, en tant qu'additif de réaction, une ou plusieurs matières appartenant au groupe suivant : poudres et liquides de nature organique et inorganique lesquels sont capables de réagir de manière approprié avec le composant, l'huile de fluxage ou le liant de base concerné(e) (pour effectuer un durcissement à froid), comme par exemple les agents complexants (chélatants), les anhydrides d'acide, les polyols et les acides carboxyliques, des amines grasses, les sels inorganiques de cations et anions mono- et plurivalents, le ciment Portland, les ciments rapides ou spéciaux, le calcaire ou le gypse dans ses différentes variétés, la dolomite, les cendres volantes et les scories, les variétés de verre et le verre soluble, les gels de silice, les aluns.

7. Ruban d'étanchéité selon les revendications 3 à 6, **caractérisé en ce que** le liant subissant un processus de durcissement réactif, lequel est contenu dans le corps de ruban, contient un activateur constitué d'un ou de plusieurs produits appartenant au groupe suivant : eau, glycols, alcools gras, agents tensioactifs (anioniques, non-ioniques ou cationiques) ou leurs solutions dans l'eau ou dans d'autres solvants, acides et solutions alcalines de nature organique ou inorganique, sels de métaux, soufre et ses composés, peroxydes, latex ou dispersions de résine de synthèse.

8. Ruban d'étanchéité selon l'une des revendications précédentes, **caractérisé en ce que** le corps de ruban est entouré par une feuille en matière plastique, de préférence par une feuille de polyéthylène.

9. Ruban d'étanchéité selon l'une des revendications précédentes, **caractérisé en ce qu'**il comporte, sur au moins une face, une couche adhésive se présentant préférentiellement sous forme d'une feuille adhésive.

10. Ruban d'étanchéité selon l'une des revendications précédentes, **caractérisé en ce que** le ruban d'étanchéité présente une épaisseur inférieure à 10 mm, de préférence comprise entre 3 et 6 mm.

11. Ruban d'étanchéité selon l'une des revendications précédentes, destiné à être utilisé comme élément d'étanchéité entre un élément froid, tel qu'une couche d'asphalte (1) refroidie, un objet à intégrer dans ladite couche d'asphalte ou à juxtaposer à ladite couche d'asphalte, et une couche d'asphalte (2) adjacente laquelle sera ultérieurement mise en place à chaud, **caractérisé en ce que** le ruban d'étanchéité (3) présente une zone (4) destinée à être appliquée sur le flanc (6) de l'élément (1) froid et une zone (5) destinée à être appliquée sur une section (7) horizontale faisant partie de l'élément (1) froid et se situant dans la prolongation du flanc (6), la zone (4) destinée à être posée sur le flanc (6) de l'élément (1) froid ayant préférentiellement une épaisseur supérieure à celle de la zone (5) destinée à être posée sur une section (7) horizontale faisant partie de l'élément (1) froid et se situant dans la prolongation du flanc (6), la largeur de la zone (4) destinée à être posée sur le flanc (6) de l'élément (1) froid correspondant préférentiellement à une à quatre fois, avec une préférence particulière à deux à trois fois, la largeur de la zone (5) destinée à être posée sur une section (7) horizontale faisant partie de l'élément (1) froid et se situant dans la prolongation du flanc (6).

12. Procédé d'étanchéification d'un joint entre un élément (1) froid et une couche d'asphalte (2) adjacente laquelle sera ultérieurement mise en place à chaud, à l'aide d'un ruban d'étanchéité (3) selon la revendication 11, **caractérisé en ce que**
- l'on relie le ruban d'étanchéité (3), avec sa zone (4) destinée à être posée sur le flanc (6) de l'élément (1) froid, au flanc (6) de l'élément (1) froid, pour ensuite relier le ruban d'étanchéité (3), avec sa zone (5) destinée à être posée sur une section (7) horizontale faisant partie de l'élément (1) froid et se situant dans la prolongation du flanc (6), à la section (7) horizontale faisant partie de l'élément (1) froid et se situant dans la prolongation du flanc (6), ou
- l'on relie le ruban d'étanchéité (3), avec sa zone (5) destinée à être posée sur une section (7) horizontale faisant partie de l'élément (1) froid et se situant dans la prolongation du flanc (6), à la section (7) horizontale faisant partie de l'élément (1) froid et se situant dans la prolongation du flanc (6), pour ensuite relier le ruban d'étanchéité (3), avec sa zone (4) destinée à être posée sur le flanc (6) de l'élément (1) froid, au flanc (6) de l'élément (1) froid,
- et qu'ensuite, on procède à la mise en place à chaud de la couche d'asphalte (2), et
- qu'enfin, on soumet la couche d'asphalte (2) chaude et la zone (7) horizontale faisant partie de l'élément (1) froid et se situant dans la prolongation du flanc (6) à un laminage.

13. Procédé de fabrication d'un ruban d'étanchéité selon l'une des revendications 1 à 7 et la revendication 9, **caractérisé en ce que**
- l'on met en place une feuille adhésive dont la face comportant de l'adhésif est recouverte d'un papier de protection ou d'une feuille de protection,
- l'on prépare une masse de moulage comportant un liant contenant du bitume et subissant un processus de durcissement réactif, ladite préparation étant réalisée en faisant réagir les composants dudit liant les uns avec les autres, et
- l'on applique celle-ci, alors qu'elle est encore à l'état fluide, sur la face de la feuille adhésive laquelle se trouve à l'opposé du papier de protection ou de la feuille de protection et laquelle comporte de préférence aussi de l'adhésif, pour l'y laisser se solidifier.

14. Procédé selon la revendication 13, **caractérisé en ce que** l'on effectue, une fois la masse de moulage solidifiée, une découpe de l'ensemble masse de moulage - feuille adhésive de manière à obtenir des bandes.

15. Procédé de fabrication d'un ruban d'étanchéité selon la revendication 8, **caractérisé en ce que**
- l'on met en place une enveloppe tubulaire en feuille de matière plastique, de préférence une enveloppe tubulaire en feuille de polyéthylène,
- l'on prépare une masse de moulage comportant un liant contenant du bitume et subissant un processus de durcissement réactif, ladite préparation étant réalisée en faisant réagir les composants dudit liant les uns avec les autres, et
- l'on introduit celle-ci dans l'enveloppe tubulaire en feuille de matière plastique pour l'y laisser se solidifier,
- l'enveloppe tubulaire étant, après son remplissage, préférentiellement aplatie en exerçant une pression pendant la solidification.

16. Utilisation du ruban d'étanchéité selon l'une des revendications 1 à 11, ou d'un ruban d'étanchéité fabriqué selon un procédé des revendications 13 ou 14, en tant que ruban de joint destiné à étanchéifier un joint entre une première bande d'asphalte et une deuxième bande d'asphalte qui est ultérieurement mise en place.

17. Utilisation du ruban d'étanchéité selon l'une des revendications 1 à 11, ou d'un ruban d'étanchéité fabriqué selon un procédé des revendications 13 ou 14, pour étanchéifier un joint entre une couche d'asphalte et un objet qui a été intégré dans la couche d'asphalte ou appliqué sur la couche d'asphalte.

18. Utilisation du ruban d'étanchéité selon l'une des revendications 1 à 7 ou 9, ou d'un ruban d'étanchéité fabriqué selon les revendications 13 ou 14, pour colmater des fissures dans une couche d'asphalte.

19. Utilisation du ruban d'étanchéité selon l'une des revendications 1 à 7 ou 9, ou d'un ruban d'étanchéité fabriqué selon les revendications 13 ou 14, en tant que couche SAMI entre une couche d'asphalte nécessitant une réparation et une couche de roulement en asphalte.

20. Utilisation du ruban d'étanchéité selon l'une des revendications 1 à 10, ou d'un ruban d'étanchéité fabriqué selon les revendications 13, 14 ou 15, pour étanchéifier et égaliser le joint entre deux éléments de construction adjacents constitués de béton et/ou de métal.
